# EUROPÄISCHE PATENTSCHRIFT

(11) **EP 1 421 130 B1**
(45) Veröffentlichungstag und Bekanntmachung des Hinweises auf die Patenterteilung: **08.02.2012**
(21) Anmeldenummer: 02796215.8
(22) Anmeldetag: 09.08.2002
(51) Int. Cl.: C08G 18/10, C08G 18/48, C08G 18/76, C09J 175/08

(54) **HERSTELLVERFAHREN FÜR PRESSWERKSTOFFE**
FABRICATION METHOD FOR PRESS MATERIALS
PROCEDE DE FABRICATION DE MATERIAUX COMPRIMES

(30) Priorität: 22.08.2001 DE 10141209
(43) Veröffentlichungstag der Anmeldung: 26.05.2004
(73) Patentinhaber: Bayer MaterialScience AG, 51368 Leverkusen (DE)
(72) Erfinder: HAAS, Peter, 42781 Haan (DE); FRICK, Theodore, Moon Township, PA 15108 (US); BRASSAT, Ingo, 51373 Leverkusen (DE); LARIMER, Donald-Richard, 51469 Bergisch Gladbach (DE); PIELASCH, Andreas, 51069 Köln (DE)
(86) Internationale Anmeldenummer: PCT/EP2002/008914
(87) Internationale Veröffentlichungsnummer: WO 2003/018659

(56) Entgegenhaltungen:
- EP-A- 0 093 357
- EP-A- 0 095 594
- EP-A- 0 352 558
- EP-A- 1 201 695
- EP-A- 1 201 696
- WO-A-95/10555

## Beschreibung

Die Erfindung betrifft ein Verfahren zur Herstellung von Holzwerkstoffen durch Verpressen von mit Bindemittel beleimten lignocellulosehaltigen Materialien, bei dem durch spezielle Bindemittel die Kaltklebefestigkeit der lignocellulosehaltigen Materialien erhöht wird.

Presswerkstoffe als Veredlungsprodukte aus Lignocelluloserohstoffen wie Holzspäne, Holzfasern oder Furnieren und Bindemitteln oder Leimen werden durch Verpressung bei unterschiedlichen Temperaturen gefertigt. Sie spielen als hochwertige Materialien für den Möbel-, Bau- und Verpackungssektor eine bedeutende Rolle.

Wichtige Bindemittel bei der Herstellung dieser Produkte sind Aminoplastharze oder Phenoplastharze sowie Bindemittel auf der Basis von Polyisocyanaten der Diphenylmethanreihe (pMDI).

Nachteil dieser pMDI-Bindemittel ist eine schlechtere Kaltklebefestigkeit der beleimten Produkte. Dies macht sich im Bereich der Kanten bemerkbar, wenn die beleimten kalt vorgepressten Formlinge während des Fertigungsprozesses ohne seitliche Abstützung bewegt werden. Hier kommt es dann zum Abbruch im Kantenbereich, so dass der Holzwerkstoff-Formling abschließend im Ausmaß des Kantenbruchs besäumt werden muss.

Zur Lösung dieses Problems sind verschiedene Vorschläge gemacht worden. Laut EP-A 352 558 wird die Kaltklebefestigkeit durch Verwendung von Polyisocyanaten, Verbindungen mit mindestens zwei gegenüber Isocyanaten reaktionsfähigen Wasserstoffatomen und Alkylencarbonaten verbessert. In EP-A 93 357 werden Prepolymere auf der Basis von urethanmodifizierten Diphenylmethandiisocyanaten als Bindemittel beschrieben. Aus WO 99/19141 gehen Bindemittel aus Diphenylmethandiisocyanaten und isocyanatreaktiven Polymeren für die Sperrholzherstellung durch Furnierverpressung hervor.

Es wurde nun gefunden, dass die Kaltklebefestigkeit bei der Verarbeitung der besonders anfälligen Späne erheblich verbessert werden kann, wenn pMDI-Prepolymere als Bindemittel verwendet werden, die durch Umsetzung mit EO-reichen hydroxyfunktionellen Polyethern urethanmodifiziert sind.

Gegenstand der vorliegenden Erfindung ist ein Verfahren zur Herstellung von Presswerkstoffen auf der Basis von Lignocellulose-Materialien und Prepolymeren als Bindemittel, bei dem als Bindemittel Urethangruppen enthaltende Prepolymere mit einem NCO-Gehalt von 20 bis 31 Gew.-% verwendet werden, die durch Umsetzung von Polyisocyanaten der Diphenylmethandiisocyanat-Reihe mit hydroxyfunktionellen Polyethern mit einen EO-Gehalt von mehr als 60 Gew-%, bezogen auf die Gesamtmenge an zur Herstellung der Polyether eingesetzten Alkylenoxiden, erhältlich sind.

Zur Herstellung der Prepolymere werden Polyisocyanate der Diphenylmethandiisocyanat-Reihe eingesetzt, z.B. Polyphenyl-polymethylen-polyisocyanate, wie sie durch Anilin-Formaldehyd-Kondensation und anschließende Phosgenierung hergestellt werden ("rohes MDI"). Bevorzugt setzt man als Polyisocyanatkomponente höherkernige Isocyanate der Diphenylmethandiisocyanat-Reihe (pMDI-Typen) ein. Besonders bevorzugt weisen diese einen Gehalt an monomerem Diphenylmethandiisocyanat von weniger als 55 Gew.-% auf.

Die Prepolymere werden durch Umsetzung der Polyisocyanate mit hydroxyfunktionellen Polyethern mit einen EO-Gehalt von mehr als 60 Gew.-%, bevorzugt mehr als 70 Gew.-%, bezogen auf die Gesamtmenge an zur Herstellung der Polyether eingesetzten Alkylenoxiden, erhalten. Die hydroxyfunktionellen Polyether weisen in der Regel 1 bis 8, bevorzugt 2 bis 6 OH-Gruppen auf. Sie besitzen bevorzugt zahlenmittlere Molekulargewichte von 400 bis 10 000 g/Mol, besonders bevorzugt 1 000 bis 8 000 g/Mol. Es werden vorzugsweise Poly(oxypropylen-polyoxyethylen)polyole eingesetzt.

Die hydroxyfunktionellen Polyether werden durch anionische Polymerisation von Alkylenoxiden in Gegenwart von aktive Wasserstoffatome enthaltenden Starterverbindungen hergestellt. Geeignete Alkylenoxide enthalten 2 bis 4 Kohlenstoffatome im Alkylenrest. Beispiele sind neben Ethylenoxid Tetrahydrofuran, 1,2-Propylenoxid, 1,2- bzw. 2,3-Butylenoxid, vorzugsweise werden Ethylenoxid (BO) und 1,2-propylenoxid (PO) eingesetzt. Die Alkylenoxide könnten alternierend nacheinander oder als Mischungen verwendet werden.

Als aktive Wasserstoffatome aufweisende Starterverbindungen werden Verbindungen mit (zahlenmittleren) Molekulargewichten von 18 bis 2 000 g/Mol und 1 bis 8 Hydroxylgruppen ausgewählt aus Sorbit, Rohrzucker oder abgebauter Stärke eingesetzt.

Die Umsetzung von Polyisocyanaten und hydroxyfunktionellen Polyethern erfolgt in der Regel bei Temperaturen von 20 bis 120°C. Polyisocyanate und hydroxyfunktionelle Polyether werden in solchen Mengenverhältnissen eingesetzt, dass das gebildete Prepolymer einen NCO-Gehalt von 20 bis 31 Gew.-%, bevorzugt 22 bis 28 Gew.-% aufweist. Bevorzugt haben die Prepolymere ein Äquivalenzgewicht von 250 bis 5 000 g/Mol.

Geeignete lignocellulosehaltige Rohstoffe sowie Recyclate auf Kunststoffbasis, die mit dem erfindungsgemäßen Bindemittel gebunden werden können, sind beispielsweise Holz, Rinde, Kork, Bagasse, Stroh, Flachs, Bambus, Alfagras, Reisschalen, Sisal- und Kokosfasern, sowie Polyurethan-Hartschäume, Polyurethan-Integralschäume oder andere Kunststoffe. Das Material kann dabei in Form von Granulaten, Strands, Spänen, Fasern oder Mehl vorliegen und einen Wassergehalt von z.B. 0 bis 35 Gew.-%, vorzugsweise von 5 bis 25 Gew.-%, aufweisen. Besonders gut eignet sich das erfindungsgemäße Verfahren zur Verarbeitung von Holzspänen.

Der Rohstoff wird mit dem Bindemittel in einer Menge von 1 bis 100 Gew.-%, vorzugsweise 1,5 bis 12 Gew.-%, versetzt und - im allgemeinen unter Einwirkung von Druck und Hitze (z.B. 70 bis 250°C und 1 bis 150 bar) - zu Platten oder Formkörpern verpresst.

### Beispiele

### A. Prepolymere

Zur Herstellung der Prepolymere wurden die jeweiligen Komponenten vermischt und anschließend zwei Stunden lang unter ständigem Rühren bei 95°C getempert.

### Prepolymer 1 (Vergleich)

Prepolymer aus 840 g eines polymeren MDI ('pMDI') mit einem NCO-Gehalt von ca. 31,5 Gew.-% (Desmodur^{®} 44V20L, Bayer AG) und 210 g eines mit Glycerin gestarteten Polyetherpolyols der OH-Zahl 36 mit 85 % primären OH-Gruppen, PO/EO-Verhältnis 28 Gew.-% / 72 Gew.-%. Das Prepolymer hat einen NCO-Gehalt von 24,5 Gew.-% und eine Viskosität von 1400 mPa·s (25°C).

### Prepolymer 2

Prepolymer aus 840 g Desmodur^{®} 44V20L und 160 g eines mit Sorbit gestarteten Polyetherpolyols der OH-Zahl 100 mit 90 % primären OH-Gruppen, PO/EO-Verhältnis 18 Gew.-%/82 Gew.%. Das Prepolymer hat einen NCO-Gehalt von 25,5 Gew.-% und eine Viskosität von 2500 mPa·s (25°C).

### Prepolymer 3 (Vergleich)

Prepolymer aus 775 g Desmodur^{®} 44V20L und 225 g eines mit Butyldiethylenglykol gestarteten Polyetherpolyols der OH-Zahl 25 mit 90 % primären OH-Gruppen, PO/EO-Verhältnis 15 Gew.-%/85 Gew.-%. Das Prepolymer hat einen NCO-Gehalt von 23,4 Gew.-% und eine Viskosität von 620 mPa·s (25°C).

### Prepolymer 4 (Vergleich)

Prepolymer aus 266 g Desmodur^{®} D. 44V20L und 60 g eines mit Ethylenglykol gestarteten Polyethylenoxids der OH-Zahl 73. Das Prepolymer hat einen NCO-Gehalt von 24,3 Gew.-% und eine Viskosität von 1300 mPa·s (25°C).

### Prepolymere 5 (Vergleich)

Prepolymer aus 840 g Desmodur^{®} 44V20L und 160 g eines mit Propylenglykol gestarteten Polyetherpolyols der OH-Zahl 185 mit mehr als 90 % primären OH-Gruppen, PO/EO-Verhältnis 3 Gew.-%/97 Gew.-%. Das Prepolymer hat einen NCO-Gehalt von 24,1 Gew.-% und eine Viskosität von 3100 mPa·s (25°C).

### Prepolymer 6 (Vergleich)

Prepolymer aus 1200 g Desmodur^{®} 44V20L und 300 g eines mit Trimethylolpropan gestarteten Polyetherpolyols der OH-Zahl 28 mit 85 % primären OH-Gruppen, PO/EO-Verhältnis 85 Gew.-%/15 Gew.-%. Das Prepolymer hat einen NCO-Gehalt von 24,4 Gew.-% und eine Viskosität von 1240 mPa·s (25°C).

### Prepolymer 7 (Vergleich)

Prepolymer aus 1 200 g Desmodur^{®} 44V20L und 300 g eines mit Propylenglykol gestarteten Polyetherpolyols der OH-Zahl 28 mit 85 % primären OH-Gruppen, PO/EO-Verhältnis 50 Gew.-%/50 Gew.-%. Das Prepolymer hat einen NCO-Gehalt von 23,8 Gew.-% und eine Viskosität von 1 200 mPa·s (25°C).

### B. Beleimung von Spänen

Holzspäne aus Nadelholz und Laubholz mit einem Anfangsfeuchtegehalt von 4,5 Gew.-% wurden in einer Laborbeleimungsmaschine vom Typ Drais ChargenMischer mit 1,3 bar Luftdruck und 0,3 bar Bindemitteldruck sowie 5,0 Gew.-% des jeweiligen Prepolymers, bezogen auf das Trockengewicht (atro) der Späne, als Bindemittel beleimt. Gleichzeitig wurde auf die Späne so viel Wasser aufgesprüht, dass ihr Endfeuchtegehalt nach Beleimung 15 Gew.-% betrug.

Die Späne wurden in eine Form der Größe 400 mm x 400 mm x 33 mm eingebracht. Der erhaltene Formling, der eine Rohdichte von 350 kg/m³ aufwies, wurde bei Raumtemperatur auf 10 mm Höhe verdichtet. Die offene Zeit von Beginn der Beleimung bis zum Beginn der Verdichtung betrug 45 Min.

### C. Bestimmung der Kaltklebefestigkeit

Die Form wurde entfernt und die verdichteten Spankuchen-Formlinge auf ebener Fläche über eine freie Kante verschoben, bis der Bruch des Spankuchens eintrat. Die Länge der Bruchkante ist ein Maß für die Kaltklebefestigkeit.

Die Ergebnisse sind in der folgenden Tabelle zusammengefasst:

| **Bindemittel** | **Länge der Bruchkante [mm]** |
|---|---|
| **Vergleichsbeispiele** | |
| Desmodur^{®} 44 V20L | 70 |
| Prepolymer 1 | 130 |
| Prepolymer 3 | 130 |
| Prepolymer 4 | 140 |
| Prepolymer 5 | 130 |
| Prepolymere 6 | 70 |
| Prepolymer 7 | 70 |
| Bindemittel gemäß EP-A 352 558 / Bsp. 3 | 70 |

| **Erfindungsgemäßes Beispiel** | |
|---|---|
| Prepolymer 2 | 150 |

Der mit dem erfindungsgemäßen Bindemittel hergestellte Formkörper weist die längste Bruchkante auf.

## Patentansprüche

1. Verfahren zur Herstellung von Holzwerkstoffen, bei dem mit Bindemittel beleimte lignocellulosehaltige Materialien verpresst werden, wobei als Bindemittel Urethangruppen enthaltende Prepolymere mit einem NCO-Gehalt von 20 bis 31. Gew.-% verwendet werden, die durch Umsetzung von Polyisocyanaten der Diphenylmethandiisocyanat-Reihe mit hydroxyfunktionelle Polyether mit einen EO-Gehalt von mehr als 60 Gew-%, bezogen auf die Gesamtmenge an zur Herstellung der Polyether eingesetzten Alkylenoxiden, erhältlich sind, wobei die hydroxyfunktionellen Polyether durch anionische Polymerisation von Alkenyloxiden in Gegenwart von Starterverbindungen mit zahlenmittleren Molekulargewichten von 18 bis 2 000 g/Mol und 1 bis 8 Hydroxylgruppen, ausgewählt aus Sorbit, Rohrzucker oder abgebauter Stärke, erhalten werden.

2. Verfahren gemäß Anspruch 1, bei dem als als Polyisocyanat polymeres Diphenylmethandiisocyanat (pMDI) mit einem Gehalt an monomerem Diphenylmethandiisocyanat von weniger als 55 Gew.-% eingesetzt wird.

3. Verwendung von Urethangruppen enthaltenden Prepolymeren mit einem NCO-Gehalt von 20 bis 31 Gew.-%, die durch Umsetzung von Polyisocyanaten der Diphenylmethandiisocyanat-Reihe mit hydroxyfunktionellen Polyethem mit einen EO-Gehalt von mehr als 60 Gew-%, bezogen auf die Gesamtmenge an zur Herstellung der Polyether eingesetzten Alkylenoxiden, erhältlich sind, bei der Herstellung von lignocelluloschaltige Materialien enthaltenden Werkstoffen, wobei die hydroxyfunktionellen Polyether durch anionische Polymerisation von Alkenyloxiden in Gegenwart von Starterverbindungen mit zahlenmittleren Molekulargewichten von 18 bis 2 000 g/Mol und 1 bis 8 Hydroxylgruppen, ausgewählt aus Sorbit, Rohrzucker oder abgebauter Stärke, erhalten werden.

## Claims

1. Process for production of woodbase construction materials wherein binder-resinated lignocellulosic materials are press moulded, said binder comprising prepolymers containing urethane groups and having an NCO content of 20 to 31 wt% which are obtainable by reaction of polyisocyanates of the diphenylmethane diisocyanate series with hydroxy-functional polyethers having an EO content of more than 60 wt% with respect to the total amount of alkylene oxides used to prepare the polyethers, said hydroxy-functional polyethers being obtained by anionic polymerization of alkenyl oxides in the presence of starter compounds having number average molecular weights of 18 to 2000 g/mol and 1 to 8 hydroxyl groups, selected from sorbitol, cane sugar or degraded starch.

2. Process according to Claim 1, wherein polymeric diphenylmethane diisocyanate (pMDI) having a monomeric diphenylmethane diisocyanate content of less than 55 wt% is used as polyisocyanate.

3. Use of prepolymers containing urethane groups and having an NCO content of 20 to 31 wt% which are obtainable by reaction of polyisocyanates of the diphenylmethane diisocyanate series with hydroxy-functional polyethers having an EO content of more than 60 wt% with respect to the total amount of alkylene oxides used to prepare the polyethers, in the production of construction materials containing lignocellulosic materials, said hydroxyfunctional polyethers being obtained by anionic polymerization of alkenyl oxides in the presence of starter compounds having number average molecular weights of 18 to 2000 g/mol and 1 to 8 hydroxyl groups, selected from sorbitol, cane sugar or degraded starch.

## Revendications

1. Procédé de fabrication de matériaux à base de bois, selon lequel des matériaux lignocellulosiques collés avec un liant sont comprimés, des prépolymères contenant des groupes uréthane ayant une teneur en NCO de 20 à 31 % en poids, qui peuvent être obtenus par mise en réaction de polyisocyanates de la série du diisocyanate de diphénylméthane avec des polyéthers à fonction hydroxy ayant une teneur en EO de plus de 60 % en poids, par rapport à la quantité totale d'oxydes d'alkylène utilisés pour la fabrication des polyéthers, étant utilisés en tant que liant, les polyéthers à fonction hydroxy étant obtenus par polymérisation anionique d'oxydes d'alkylène en présence de composés démarreurs ayant des poids moléculaires moyens en nombre de 18 à 2 000 g/mol et contenant 1 à 8 groupes hydroxyle, choisis parmi le sorbitol, le sucre de canne ou l'amidon décomposé.

2. Procédé selon la revendication 1, dans lequel un diisocyanate de diphénylméthane polymère (pMDI) ayant une teneur en diisocyanate de diphénylméthane monomère inférieure à 55 % en poids est utilisé en tant que polyisocyanate.

3. Utilisation de prépolymères contenant des groupes uréthane ayant une teneur en NCO de 20 à 31 % en poids, qui peuvent être obtenus par mise en réaction de polyisocyanates de la série du diisocyanate de diphénylméthane avec des polyéthers à fonction hydroxy ayant une teneur en EO de plus de 60 % en poids, par rapport à la quantité totale d'oxydes d'alkylène utilisés pour la fabrication des polyéthers, lors de la fabrication de matériaux contenant des matériaux lignocellulosiques, les polyéthers à fonction hydroxy étant obtenus par polymérisation anionique d'oxydes d'alkylène en présence de composés démarreurs ayant des poids moléculaires moyens en nombre de 18 à 2 000 g/mol et contenant 1 à 8 groupes hydroxyle, choisis parmi le sorbitol, le sucre de canne ou l'amidon décomposé.
